Europäisches Patentamt

European Patent Office

Office européen des brevets

(19)

(11) **EP 0 592 520 B1**

(12) **EUROPEAN PATENT SPECIFICATION**

(45) Date of publication and mention
of the grant of the patent:
**18.09.1996 Bulletin 1996/38**

(21) Application number: **92914259.4**

(22) Date of filing: **26.06.1992**

(51) Int Cl.6: **G01B 15/02**

(86) International application number:
**PCT/GB92/01163**

(87) International publication number:
**WO 93/00567 (07.01.1993 Gazette 1993/02)**

(54) **METHOD FOR CALIBRATING AN X-RAY LAYER THICKNESS MEASURING APPARATUS**

Verfahren zur Kalibrierung einer mit Röntgenstrahlung arbeitenden Schichtdickenmesseinrichtung

PROCEDE DE CALIBRAGE D'UN APPAREIL DE MESURE D'EPAISSEUR DE COUCHE PAR RAYONS X

(84) Designated Contracting States:
**DE FR GB NL**

(30) Priority: **28.06.1991 GB 9113990**

(43) Date of publication of application:
**20.04.1994 Bulletin 1994/16**

(73) Proprietors:
• **DATA MEASUREMENT CORPORATION**
**Gaithersburg, MD 20877 (US)**
• **DMC BOYLE (UK) LIMITED**
**North Fleet, Kent DA11 9NE (GB)**

(72) Inventors:
• **GIGNOUX, Dominique**
**Bethesda, MD 20816 (US)**

• **GOUEL, Roland, Michel**
**Gaithersburg, MD 20884 (US)**

(74) Representative: **Moore, Derek**
**Jensen & Son**
**70 Paul Street**
**London EC2A 4NA (GB)**

(56) References cited:
**US-A- 4 574 387**        **US-A- 4 803 715**

• **Patent Abstracts of Japan, Vol 12, No 319, P751, abstract of JP 63- 85308, publ 1988-04-15 KAWASAKI STEEL CORP.**

## Description

Gauging systems for thickness or coating thickness measurements, using X-rays have been described abundantly in the literature and in particular in United States Patent No.4574387 to Gignoux and Murray. To obtain high accuracy, it is necessary with these gauges, to accomplish from time to time, an operation known as curve fitting, which consists of placing in the beam a number of standards or combination of standards representing a large number of different thicknesses in the gauge, so as to obtain a single curve or function relating thickness to detector output. For each combination of standards in the beam the computing means of the gauge memorises the thickness represented by the sum of the standards and the reading obtained by the detector of the gauge. A curve is then fitted through all the points represented by the detector output as a function of thickness as a function of the detector output. This operation, called "curvefit" is cumbersome and costly and requires a standard magazine containing as many as 10 or 12 standards, each operated individually. The need to reestablish a complete calibration is mainly due to variations in the high voltage applied to the X-ray tube due to component tolerances, such as the high voltage resistors used as a potential divider to provide a voltage feedback proportional to the high voltage applied to the X-ray tube for regulation purposes. These high voltage resistors have manufacturing tolerances, as well as voltage and temperature coefficients.

As a result, the exact value of the high voltage applied to the X-ray tube is never known, unless it is measured directly across the X-ray tube by means of accurate but very costly high voltage meters. However, in X-ray gauging systems, high voltage variations across the X-ray tube occur as a loss of accuracy in the thickness measurement.

The need to re-establish a complete calibration is imperative, especially where the X-ray source of the gauge has to be replaced in the event of failure.

The invention seeks to provide a means for restoring the accuracy of the measurement of an X-ray gauging system measuring the thickness of a layer of material without the need to perform a complete calibration but rather by restoring the high voltage applied to the X-ray tube to the same value as applied during the original, complete calibration. Two samples are generally needed for this method, as well as a means to control automatically the high voltage across the X-ray tube. The present invention also seeks to limit the number of standards required to one or two and yet obtain the same degree of accuracy as has been provided by the known gauges.

According to the present invention there is provided a method of calibrating an apparatus for measuring the thickness of a layer, the method comprising:

i) directing a beam of X-ray radiation of predetermined energy towards a layer, the thickness of which is to be measured,
ii) detecting radiation produced from said layer as a signal which is an output function of the thickness of the layer and
iii) measuring the intensity of the radiated beam, as a value
a) without the layer being present,
b) with a sample of a first predetermined thickness,
c) with a sample of a second predetermined thickness and
d) with a sample having a thickness which produces the same value as a sample of infinite thickness,

characterized in that a calibration ratio is produced from the values of at least some or of all the measured radiation intensities representing the values of the said predetermined sample thicknesses and maintaining the calibration ratio at a fixed value by varying the energy of the beam of X-ray radiation.

The method according to the invention may be carried out in a number of ways, in one of which, the X-ray generator and the detector of radiation are disposed on opposite sides of the layer and the calibration ratio is a function having as numerator the output of the detector with the sample having the first predetermined thickness less the value of the background output of the detector of radiation and as denominator the output of the detector with the sample having the second predetermined thickness less the background output of the detector of radiation $(V_1 - V_b/V_2 - V_b)$.

In another method of carrying out the invention, the generator of X-rays and the detector means are disposed on the same side of the layer, the thickness of which is to be measured and a sheet of another material capable of fluorescence is disposed on the other side of the layer and the calibration ratio is a function having as numerator the output of the detector with the sample having the first predetermined thickness less the value of the background output of the detector of radiation and as denominator the output of the detector with the sample having the second predetermined thickness less the background output of the detector of radiation $(V_1 - V_b/V_2 - V_b)$.

In another method according to invention, the generator of X-rays and the detector means are disposed on the same side of the layer, the thickness of which is to be measured and a sheet of another material capable of backscatter is disposed on the other side of the layer and the calibration ratio is a function having as numerator the output of the detector with the sample having the first predetermined thickness less the value of the background output of the detector of radiation and as denominator the output of the detector with the sample having the second predetermined thickness less the background output of the detector of radiation.

In yet another method according to the invention, the generator of X-ray and the detector of radiation are disposed on the same side of the layer, the thickness of which is to be measured, the material of the layer is capable of fluorescence and the calibration ratio is a function having as numerator the output of the detector with the sample absent less the value of the sample having the second predetermined thickness and as denominator the output of the detector with the sample absent less the output of the detector of radiation with the sample of infinite thickness ($V_o - V_2/V_o - V_3$).

According to a further method of carrying out the invention, the generator of X-ray and the detector of radiation are disposed on the same side of the layer, the thickness of which is to be measured, the material of the layer is capable of fluorescence and the calibration ratio is a function having as numerator the output of the detector with the sample having the first predetermined thickness less the value of the background output of the detector of radiation and as denominator the output of the detector with the sample of infinite thickness less the background output of the detector of radiation ($V_1 - V_b/V_3 - V_b$).

In a further method of practising the invention, the generator of X-ray and the detector of radiation are disposed on the same side of the layer, the thickness of which is to be measured, the material of the layer is capable of backscatter and the calibration ratio is a function having as numerator the output of the detector with the sample absent less the value of the sample having the second predetermined thickness and as denominator the output of the detector with the sample absent less the output of the detector of radiation with the sample of infinite thickness ($V_o - V_2/V_o - V_3$). In carrying the invention into effect, the thickness of the sample having the first predetermined thickness may be equal to zero.

The invention will now be described by way of example and with reference to the accompanying drawings, in which

Figure 1 is a schematic illustration of the arrangement of the parts of the apparatus in a first embodiment and

Figure 2 is a similar schematic diagram of a second embodiment.

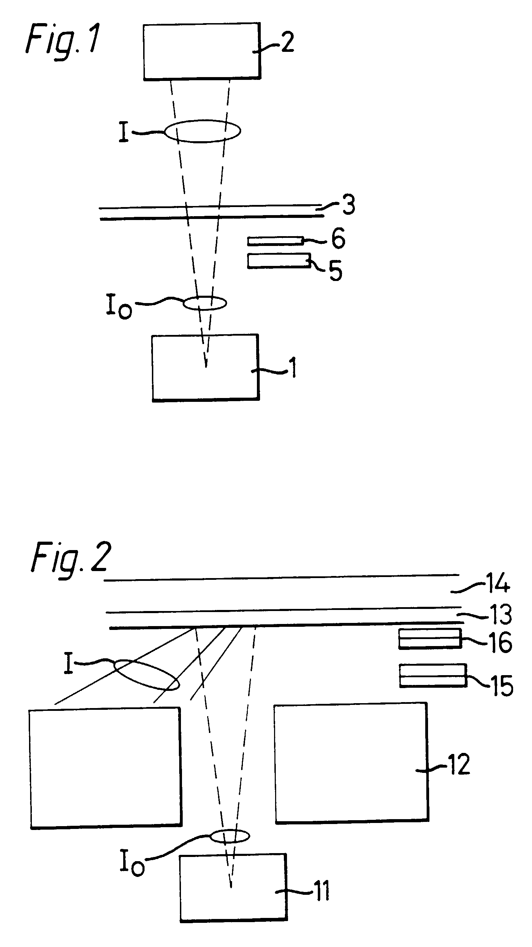

As shown in Figure 1, thickness of a layer is measured by the transmission method, in which a source of X-ray radiation 1 emits a beam of radiation, of predetermined energy, towards a detector 2. A layer of material 3, that is to be measured, is placed between the source 1 and the detector 2, so that a beam of radiation having an intensity $I_o$ prior to passing through the layer, reaches the detector with an intensity of I. The apparatus includes two standardising plates 5 and 6.

As a first approximation, the thickness x of the layer 3 being measured is related to the values I and $I_o$ by the following equations:

$$(1) \qquad I = I_o e^{-\frac{x}{q}}$$

$$(2) \qquad -x = q * \ln(\frac{I}{I_o})$$

The factor q is the mean free path of the photons of the beam of radiation going through the material.

As the intensity of the radiation beam varies, the quantities I and $I_0$ vary. Such a variation in intensity affects I and $I_0$ in the same proportion. A change in the voltage energy E of the X-ray tube changes the shape of the curve through the change in the coefficient q and through the change in $I_0$. Coefficient q may vary with E as follows:

$$q \sim E^3$$

and if the current of electrons in the vacuum of the X-ray tube is constant:

$$I_0 \sim E^2$$

During a measurement I and $I_0$ will both vary as the second power of E. In the application of equation (2) it is assumed that the variations of E will cause variations of q and I but not of the value of $I_0$ used in the formula as $I_0$ was measured before the variation of E.

It is obvious from this formula that a change in the value of E that is not corrected will result in a change in the value of x according to a relation of the type given by:

$$dx/x = n*dE/E$$

where n varies between 3 and 13.

Thus to ensure that x does not vary by more than 1 part per 1000, it is necessary to ensure that E does not vary by more than 1/3 to 1/13 of a part per 1000, but this is difficult to obtain.

In general, regulating systems are used to provide a constant value of the voltage E. In the most common embodiment, the voltage is divided by a resistive potential divider and used in a closed loop circuit to keep the high voltage constant. One of the main problems is that the resistors used to measure very high voltages are sensitive to temperature variation and may indeed vary sufficiently to cause the voltage not only to stay constant but to vary beyond acceptable limits. For this reason, a full standard magazine is generally provided in the known gauges, so that curve or function relating x and I can be redetermined as often as may be needed.

It will be obvious that a variation in voltage will cause equal relative variations of I and $I_o$. It will be equally obvious therefore, in order to maintain a constant voltage, the factor q must remain constant.

This can be achieved by measuring the ratio of I to $I_o$, that is, a transmission ratio for a constant thickness x provided by a standard sample.

In this manner, the transmission ratio is used as a measurement of the high voltage applied to the X-ray tube and a closed loop control circuit is used to vary the voltage after a drift until the transmission ratio has been reestablished at its previous value. The new value of the voltage is then equal to the one that occurred before the measurement.

In practice, it is not generally possible to measure $I_o$ because of limitations of the electronic elements. One then uses two samples, 4 and 5 as shown in Figure 1, having thicknesses of $x_1$ and $x_2$ respectively. If the quantities measured after a suspected drift in energy are indicated by a prime, we get:

$$I_1 = I_o e^{-\frac{x_1}{q}}$$

$$I_2 = I_o e^{-\frac{x_2}{q}}$$

$$I'_1 = I'_o e^{-\frac{x_1}{q}}$$

$$I'_2 = I'_o e^{-\frac{x_2}{q}}$$

and

$$I_1/I_2 = e^{-\frac{1}{q}(x_1-x_2)}$$

$$I'_1/I'_2 = e^{-\frac{1}{q}(x_1-x_2)}$$

For q not to vary, i.e. that $q = q'$ it is necessary and sufficient that the ratio of the measured values of I remain constant:

$$I_1/I_2 = I'_1/I'_2$$

This ratio is termed the calibration ratio. In practice, once the value of the calibration ratio has been found to drift, it is then possible to vary the value of E until the calibration ratio has reached its former value. In this manner, the value of E is maintained constant in a more accurate manner than by measuring E by means of a resistive potential divider. It is also possible to determine the direction in which E has changed by the direction of the change in this ratio.

The method described above can be combined with a correction made on the intensity of the radiation beam $I_o$ if the latter varies for other reasons than a variation in the value of E.

If the calibration range reaches the thickness value equivalent to zero, then the method above is still valid. The equations are more simple, since in such a case:

$$\text{when } x_1 = 0 \; ; \; I_1 = I_o$$

A very similar analysis can be made for X-ray fluorescence gauges, for example as illustrated in Figure 2.

An X-ray beam of intensity $I_o$ produced by an X-ray source 11 is directed at a layer of material or coating 13 to be measured, supported by a substrate 14. A fluoresced beam of intensity I is collected by a detector 12.

In this preferred configuration, the detector is an annular arrangement surrounding the beam, so as to maximise the quantity of the fluoresced radiation to be collected by the detector. Samples 15 and 16 contain two different thicknesses of the same layer of the material on the substrate.

The relation between I and $I_o$ depends on the thickness x of the layer in two different manners, depending on whether the fluoresced beam collected by the detector is emitted by the substrate or by the layer to be measured.

A If the fluoresced beam is emitted by the layer to be measured, the relationship is given by:

$$I = I_\infty (1-e^{-\mu x})$$

where $I_\infty$ is the intensity obtained when the layer has a very large thickness ($x = \infty$) and $\mu$ is a characteristic of the material and the energy of the initial beam. Obviously, $I_\infty$ is proportional to the source intensity $I_o$.

B. If the fluoresced beam is emitted by the substrate, then the relationship is given by:

$$I = kI_o e^{-\mu x}$$

where $kI_o$ is the intensity of the fluoresced beam when no layer is present ($x = 0$)

In both cases A and B above, the ratio $I_1/I_2$ obtained from two different thicknesses $x_1$ and $x_2$ can be used as a measurement of the factor $\mu$.

An analysis similar to that performed for the factor q regarding transmission gauges can be accomplished to show the relation of $\mu$ to E, the energy of the photons emitted by the X-ray source.

The embodiment of Figure 2 illustrates a system in which X-ray radiation backscatter is used for the measurement. The equations are the same as for A and B above.

In practice, all detectors exhibit a signal represented by $I_b$ for background radiation when not exposed to the radiation to be measured. Thus all values of I, $I_o$, I , $I_1$ and $I_2$ are assumed to have been corrected by subtracting the value $I_b$ of the background intensity.

## Claims

1. A method of calibrating an apparatus for measuring the thickness of a layer, the method comprising:

    i) directing a beam of X-ray radiation of predetermined energy towards a layer, the thickness of which is to be measured,
    ii) detecting radiation produced from said layer as a signal which is an output function of the thickness of the layer and
    iii) measuring the intensity of the radiated beam, as a value
    a) without the layer being present,
    b) with a sample of a first predetermined thickness,

c) with a sample of a second predetermined thickness and

d) with a sample having a thickness which produces the same value as a sample of infinite thickness,

characterized in that a calibration ratio is produced from the values of at least some or of all the measured radiation intensities representing the values of the said predetermined sample thicknesses and maintaining the calibration ratio at a fixed value by varying the energy of the beam of X-ray radiation.

2. A method according to Claim 1, in which the X-ray generator and the detector of radiation are disposed on opposite sides of the layer and the calibration ratio is a function having as numerator the output of the detector with the sample having the first predetermined thickness less the value of the background output of the detector of radiation and as denominator the output of the detector with the sample having the second predetermined thickness less the background output of the detector of radiation.

3. A method according to Claim 1, in which the generator of X-rays and the detector means are disposed on the same side of the layer, the thickness of which is to be measured and a sheet of another material capable of fluorescence is disposed on the other side of the layer and the calibration ratio is a function having as numerator the output of the detector with the sample having the first predetermined thickness less the value of the background output of the detector of radiation and as denominator the output of the detector with the sample having the second predetermined thickness less the background output of the detector of radiation.

4. A method according to Claim 1, in which the generator of X-rays and the detector means are disposed on the same side of the layer, the thickness of which is to be measured and a sheet of another material capable of backscatter is disposed on the other side of the layer and the calibration ratio is a function having as numerator the output of the detector with the sample having the first predetermined thickness less the value of the background output of the detector of radiation and as denominator the output of the detector with the sample having the second predetermined thickness less the background output of the detector of radiation.

5. A method according to Claim 1, in which the generator of X-ray and the detector of radiation are disposed on the same side of the layer, the thickness of which is to be measured, the material of the layer is capable of fluorescence and the calibration ratio is a function having as numerator the output of the detector with the sample absent less the value of the sample having the second predetermined thickness and as denominator the output of the detector with the sample absent less the output of the detector of radiation with the sample of infinite thickness.

6. A method according to Claim 1, in which the generator of X-ray and the detector of radiation are disposed on the same side of the layer, the thickness of which is to be measured, the material of the layer is capable of fluorescence and the calibration ratio is a function having as numerator the output of the detector with the sample having the first predetermined thickness less the value of the background output of the detector of radiation and as denominator the output of the detector with the sample of infinite thickness less the background output of the detector of radiation.

7. A method according to Claim 1 or Claim 4, in which the generator of X-ray and the detector of radiation are disposed on the same side of the layer, the thickness of which is to be measured, the material of the layer is capable of backscatter and the calibration ratio is a function having as numerator the output of the detector with the sample absent less the value of the sample having the second predetermined thickness and as denominator the output of the detector with the sample absent less the output of the detector of radiation with the sample of infinite thickness.

8. A method according to any one of Claims 1 to 7, in which the thickness of the sample having the first predetermined thickness is equal to zero.

9. A calibration apparatus for carrying out the method according to any one of Claims 1 to 8.

**Patentansprüche**

1. Verfahren zum Kalibrieren eines Geräts für die Dikkenmessung von Schichten, wobei das Verfahren umfaßt:

i) Richten eines Strahls an Röntgenstrahlung von vorgegebener Energie gegen eine Schicht, deren Dicke zu messen ist,

ii) Detektieren von Strahlung, welche von der Schicht erzeugt wird, als ein Signal, welches eine Ausgangsfunktion der Dicke der Schicht ist, und

iii) Messen der Intensität des Strahlungsstrahls als ein Wert

a) ohne daß die Schicht anwesend ist,

b) mit einer Probe mit einer ersten vorgegebenen Dicke,

c) mit einer Probe mit einer zweiten vorgegebenen Dicke und

d) mit einer Probe, welche eine Dicke aufweist, welche einen Wert produziert wie eine Probe mit unendlicher Dicke,

dadurch gekennzeichnet, daß ein Kalibrierungsverhältnis aus den werten von mindestens einigen oder allen gemessenen Strahlungsintensitäten, die den Werten der vorgegebenen Probendicken entsprechen, gebildet wird und daß das Kalibrierungsverhältnis bei einem festen Wert durch Variation der Energie des Strahls an Röntgenstrahlung gehalten wird.

2. Verfahren nach Anspruch 1, bei welchem der Röntgenstrahlungsgenerator und der Detektor der Strahlung auf gegenüberliegenden Seiten der Schicht angeordnet sind und das Kalibrierungsverhältnis eine Funktion darstellt, welche als Zähler das Ausgangssignal des Detektors bei einer Probe mit einer ersten vorgegebenen Dicke abzüglich des Werts an Hintergrundsignal des Strahlungsdetektors und als Nenner das Ausgangssignal des Detektors bei einer Probe, welche die zweite vorgegebene Dicke aufweist, abzüglich des Werts an Hintergrundsignal des Strahlungsdetektors, beinhaltet.

3. Verfahren nach Anspruch 1, bei welchem der Röntgenstrahlungsgenerator und der Detektor auf derselben Seite der Schicht, deren Dicke gemessen werden soll, angeordnet sind und wobei eine Schicht eines anderen Materials, welches fluoreszenzfähig ist, auf der anderen Seite der Schicht angeordnet ist und das Kalibrierungsverhältnis eine Funktion ist, welche als Zähler das Ausgangssignal des Detektors bei einer Probe mit einer ersten vorgegebenen Dicke abzüglich des Werts an Hintergrundsignal des Strahlungsdetektors und als Nenner das Ausgangssignal des Detektors bei einer Probe, welche die zweite vorgegebene Dicke aufweist, abzüglich des Werts an Hintergrundsignal des Strahlungsdetektors, beinhaltet.

4. Verfahren nach Anspruch 1, bei welchem der Röntgenstrahlungsgenerator und der Detektor auf derselben Seite der Schicht, deren Dicke zu messen ist, angeordnet sind und bei welchem eine Schicht eines rückstreufähigen Materials auf der anderen Seite der Schicht angeordnet ist und bei welchem das Kalibrierungsverhältnis eine Funktion ist, welche als Zähler das Ausgangssignal des Detektors bei einer Probe mit einer ersten vorgegebenen Dicke abzüglich des Werts an Hintergrundsignal des Strahlungsdetektors und als Nenner das Ausgangssignal des Detektors bei einer Probe, welche die zweite vorgegebene Dicke aufweist, abzüglich des Werts an Hintergrundsignal des Strahlungsdetektors, beinhaltet.

5. Verfahren nach Anspruch 1, bei welchem der Röntgenstrahlungsgenerator und der Strahlungsdetektor auf derselben Seite der Schicht, deren Dicke zu messen ist, angeordnet sind, wobei das Material der Schicht fluoreszenzfähig ist und wobei das Kalibrierungsverhältnis eine Funktion ist, welche als Zähler das Ausgangssignal des Detektors ohne eine Probe abzüglich des Werts einer Probe, welche die zweite vorgegebene Dicke aufweist, und als Nenner das Ausgangssignal des Detektors ohne eine Probe abzüglich des Ausgangssignals des Detektors an Strahlung bei einer Probe mit unendlich großer Dicke, beinhaltet.

6. Verfahren nach Anspruch 1, bei welchem der Röntgenstrahlungsgenerator und der Strahlungsdetektor auf derselben Seite der Schicht, deren Dicke zu messen ist, angeordnet sind, wobei das Material der Schicht fluoreszenzfähig ist und wobei das Kalibrierungsverhältnis eine Funktion ist, welche als Zähler das Ausgangssignal des Detektors bei einer Probe mit einer ersten vorgegebenen Dicke abzüglich des Werts an Hintergrundsignal des Strahlungsdetektors und als Nenner das Ausgangssignal des Detektors bei einer Probe mit unendlicher Dicke abzüglich des Werts an Hintergrundsignal des Strahlungsdetektors, beinhaltet.

7. Verfahren nach Anspruch 1 oder 4, bei welchem der Röntgenstrahlungsgenerator und der Detektor auf derselben Seite der Schicht, deren Dicke zu messen ist angeordnet sind, wobei das Material der Schicht rückstreufähig ist und wobei das Kalibrierungsverhältnis eine Funktion ist, welche als Zähler das Ausgangssignal des Detektors ohne eine Probe abzüglich des Werts einer Probe, welche die zweite vorgegebene Dicke aufweist, und als Nenner das Ausgangssignal des Detektors ohne eine Probe abzüglich des Ausgangssignals des Strahlungsdetektors bei einer Probe mit unendlich großer Dicke, beinhaltet.

8. Verfahren nach einem der Ansprüche 1 bis 7, bei welchem die Dicke der Probe mit der ersten vorgegebenen Dicke gleich Null ist.

9. Kalibriergerät zur Durchführung des Verfahrens gemäß einem der Ansprüche 1 bis 8.

**Revendications**

1. Méthode de calibrage d'un appareil de mesure d'épaisseur d'une couche, la méthode comprenant les étapes suivantes:

i) diriger un faisceau de radiation en rayons X d'une énergie prédéterminée vers une couche dont doit être mesurée l'épaisseur,

ii) détecter une radiation produite par ladite couche, comme signal de sortie fonction de l'épaisseur de la couche, et

iii) mesurer l'intensité du faisceau rayonné, servant de valeur

a) sans que le couche soit présente,

b) avec un échantillon d'une première épaisseur prédéterminée,

c) avec un échantillon d'une seconde épaisseur prédéterminée, et

d) avec un échantillon qui a une épaisseur produisant la même valeur qu'un échantillon d'épaisseur infinie,

caractérisée en ce qu'une rapport de calibrage est produit à partir des valeurs d'au moins quelques unes ou toutes les intensités de radiation mesurées représentant les valeurs desdites épaisseurs d'échantillons mesurées, et le rapport de calibrage étant maintenu à une valeur fixe en faisant varier l'énergie du faisceau de radiation des rayons X.

2. Méthode suivant la revendication 1, dans laquelle le générateur de rayons X et le détecteur de rayonnement sont disposés sur les côtés opposés de la couche et dans laquelle le rapport de calibrage est une fonction dont le numérateur est le signal de sortie du détecteur, l'échantillon ayant la première épaisseur prédéterminée, moins la valeur de fond continu du détecteur de radiation et dont le dénominateur est le signal de sortie du détecteur, l'échantillon ayant la seconde épaisseur prédéterminée, moins le signal de sortie de fond du détecteur de radiation.

3. Méthode suivant la revendication 1, dans laquelle le générateur de rayons X et le moyen détecteur sont disposés sur le même côté de la couche dont l'épaisseur doit être mesurée, et une feuille d'une autre matière capable de fluorescence sur l'autre côté de la couche, et le rapport de calibrage est une fonction dont le numérateur est le signal de sortie du détecteur, l'échantillon ayant la première épaisseur prédéterminée, moins la valeur de fond continu du détecteur de radiation et dont le dénominateur est le signal de sortie du détecteur, l'échantillon ayant la seconde épaisseur prédéterminée, moins le signal de sortie de fond du détecteur de radiation.

4. Méthode suivant la revendication 1, dans laquelle le générateur de rayons X et le moyen détecteur sont disposés sur le même côté de la couche dont l'épaisseur doit être mesurée, et une feuille d'une autre matière capable de rétrodiffusion sur l'autre côté de la couche, et le rapport de calibrage est une fonction dont le numérateur est le signal de sortie du détecteur, l'échantillon ayant la première épaisseur prédéterminée, moins la valeur de fond continu du détecteur de radiation et dont le dénominateur est le signal de sortie du détecteur, l'échantillon ayant la seconde épaisseur prédéterminée, moins le signal de sortie de fond du détecteur de radiation.

5. Méthode suivant la revendication 1, dans laquelle le générateur de rayons X et le moyen détecteur sont disposés sur le même côté de la couche dont l'épaisseur doit être mesurée, la matière de la couche étant capable de fluorescence, et le rapport de calibrage est une fonction dont le numérateur est le signal de sortie du détecteur, l'échantillon étant absent, moins la valeur de l'échantillon ayant la seconde épaisseur prédéterminée et dont le dénominateur est le signal de sortie du détecteur, l'échantillon étant absent, moins le signal de sortie du détecteur de radiation, l'échantillon étant d'épaisseur infinie.

6. Méthode suivant la revendication 1, dans laquelle le générateur de rayons X et le moyen détecteur sont disposés sur le même côté de la couche dont l'épaisseur doit être mesurée, la matière de la couche étant capable de fluorescence, et le rapport de calibrage est une fonction dont le numérateur est le signal de sortie du détecteur, l'échantillon ayant la première épaisseur prédéterminée, moins la valeur de fond continu du détecteur de radiation et dont le dénominateur est la sortie du détecteur, l'échantillon étant d'épaisseur infinie, moins le signal de sortie de fond du détecteur de radiation.

7. Méthode suivant la revendication 1, dans laquelle le générateur de rayons X et le moyen détecteur sont disposés sur le même côté de la couche dont l'épaisseur doit être mesurée, la matière de la couche étant capable de rétrodiffusion, et le rapport de calibrage est une fonction dont le numérateur est le signal de sortie du détecteur, l'échantillon étant absent, moins la valeur de l'échantillon ayant la seconde épaisseur prédéterminée et dont le dénominateur est le signal de sortie du détecteur, l'échantillon étant absent, moins le signal de sortie du détecteur de radiation, l'échantillon étant d'épaisseur infinie.

8. Méthode suivant l'une quelconque des revendications 1 à 7, dans laquelle l'épaisseur de l'échantillon ayant la première épaisseur prédéterminée est égale à zéro.

9. Appareil de calibrage destiné à mettre en oeuvre la méthode suivant l'une quelconque de revendication 1 à 8.

*Fig.1*

*Fig.2*